# EUROPÄISCHE PATENTANMELDUNG

(11) **EP 0 663 577 A2**
(43) Veröffentlichungstag der Anmeldung: **19.07.1995**
(21) Anmeldenummer: 94119935.8
(22) Anmeldetag: 16.12.1994
(51) Int. Cl.: F24H 9/00, F28F 13/10, A01K 5/02, F28F 19/00

(54) **Verfahren und Vorrichtung zum Aufheizen eines Mediums**

(30) Priorität: 24.12.1993 DE 4344423
(71) Anmelder: Förster, Martin, Dipl.-Ing., D-78234 Engen (DE)
(72) Erfinder: Förster, Martin, Dipl.-Ing., D-78234 Engen (DE)
(74) Vertreter: Engelhardt, Guido, Dipl.-Ing.

(57) **Zusammenfassung**

Bei einem Verfahren zum Aufheizen eines Mediums, das in einer Rohrschlange (3') einen Wärmetauscher (3) durchströmt und in diesem aufgeheizt wird, wird das zu erwärmende in der Rohrschlange (3') des Wärmetauschers (3) befindliche Medium periodisch in pulsierende Bewegungen versetzt.

Durch diese Verfahrensweise wird der Austausch der Wärmeenergie zwischen der in dem Wärmetauscher (3) befindlichen Flüssigkeit und den durch die Rohrschlange (3') geförderten Medium verbessert und der Bildung von Ablagerungen an der Innenwandung der Rohrschlange (3') wird entgegengewirkt, so daß über einen langen Zeitraum ein ungestörter Betrieb sichergestellt ist.

## Beschreibung

Die Erfindung bezieht sich auf ein Verfahren zum Aufheizen eines Mediums, vorzugsweise eines einer Saugstelle zuzuführenden in einem Mixer aufzubereitenden flüssigen Futtermittels, das in einer Rohrschlange einen Wärmetauscher durchströmt und in diesem aufgeheizt wird, sowie auf eine Vorrichtung zur Anwendung dieses Verfahrens.

Durch das DE-U1-89 10 935 ist eine Vorrichtung zum Aufheizen eines Mediums bekannt. Zur gesteigerten Umwälzung der in einem geschlossenen Behälter, der von einer Rohrschlange durchsetzt ist, befindlichen Flüssigkeit ist bei dieser Ausgestaltung in dem Behälter ein Schaufelrad angeordnet, das mittels eines Motors rotierend antreibbar ist.

Durch ständiges Umwälzen der Behälterflüssigkeit ist zwar eine gute Wärmeübertragung von in die Rohrschlange ragenden Heizkörpern auf die Flüssigkeit und von dieser auf die Rohrschlange gegeben, die Übertragung der Wärmeenergie auf das in der Rohrschlange ruhende Medium erfolgt dagegen nur sehr langsam. Außerdem ergibt sich bei dieser Verfahrensweise innerhalb des Mediums über den Rohrquerschnitt gesehen eine ungleichmäßige Erwärmung.

Bei kurzer Verweilzeit des Mediums in der Rohrschlange wird dieses somit ungenügend erwärmt. Des weiteren bilden sich oftmals an der Innenwandung der Rohrschlange Ablagerungen, durch die nicht nur das Volumen der Rohrschlange verändert wird und somit Dosierungenauigkeiten und -fehler hervorgerufen werden, sondern es wird auch die Wärmeübertragung in einem erheblichen Maße beeinträchtigt, so daß mitunter eine zufriedenstellende Betriebsweise bereits nach einer kürzeren Betriebszeit nicht mehr gegeben ist.

Aufgabe der Erfindung ist es daher, den Austausch der Wärmeenergie zwischen der in dem Wärmetauscher befindlichen Flüssigkeit und dem durch die Rohrschlange geförderten aufzuheizenden Medium zu verbessern und der Bildung von Ablagerungen an der Innenwandung der Rohrschlange entgegenzuwirken, so daß über einen langen Zeitraum ein ungestörter Betrieb sichergestellt ist. Der Bauaufwand, mittels dem dies zu erreichen ist, soll gering gehalten werden, auch sollen eine einfache Handhabung sowie ein wirtschaftlicher Einsatz gegeben sein.

Gemäß der Erfindung ist das Verfahren zum Aufheizen eines Mediums, mittels dem dies zu bewerkstelligen ist, dadurch gekennzeichnet, daß das zu erwärmende in der Rohrschlange des Wärmetauschers befindliche Medium periodisch in pulsierende Bewegungen versetzt wird.

Zweckmäßig ist es hierbei, das zu erwärmende Medium mittels eines dem Wärmetauscher vorgeschalteten, an dessen Zuführungsleitung angeschlossenen Impulsgliedes, z. B. in Form einer Kolben- oder Membranpumpe, in pulsierende Bewegungen zu versetzen.

Nach einer andersartigen Verfahrensweise ist es aber auch möglich, das zu erwärmende Medium mittels einer in der Zuführungsleitung des Wärmetauschers angeordneten Förderpumpe oder einer in einer diesem zugeordneten Bypassleitung eingesetzten Förderpumpe in pulsierende Bewegungen zu versetzen, wobei das in dem Wärmetauscher befindliche Medium periodisch ganz oder teilweise durch in dem Mixer befindliches Medium ersetzt oder in einem internen Kreislauf der Vorrichtung umgewälzt werden kann.

Zwischen den periodisch im Millisekundenbereich ausgeführten pulsierenden Bewegungen bzw. dem Austausch des zu erwärmenden Mediums sollte sich jeweils ein Ruhetakt von einigen Millisekunden anschließen, und es sollten vorzugsweise vier bis acht derartige Zyklen ausgeführt werden.

Die Vorrichtung zur Anwendung dieses Verfahrens ist dadurch gekennzeichnet, daß an die Zuleitung des Wärmetauschers ein Impulsglied angeschlossen ist, mittels dem das in der Rohrschlange des Wärmetauschers befindliche Medium in pulsierende Bewegungen versetzbar ist.

Vorteilhaft ist es, das Impulsglied durch eine Kolben- oder Membranpumpe zu bilden, die mittels eines gesteuert einschaltbaren Antriebsgliedes periodisch antreibbar ist, und in die Zuführungsleitung des Wärmetauschers in Forderrichtung vor dem an diese angeschlossenen Impulsglied ein Rückschlagventil einzusetzen.

Nach einer andersartigen Ausgestaltung ist vorgesehen, zum vollständigen oder teilweisen Austausch des in der Rohrschlange des Wärmetauschers befindlichen Mediums diesem eine zuschaltbare Bypassleitung zuzuordnen, die unmittelbar am Ausgang des Wärmetauschers oder an den Mixer und vor der in die Zuleitung eingesetzten Förderpumpe oder nach dieser, versehen mit einer zusätzlichen Förderpumpe, an die Zuleitung angeschlossen ist.

Angebracht ist es hierbei, zum Zuschalten der vor der Förderpumpe an die Zuleitung angeschlossenen Bypassleitung in diese ein elektromagnetisch betätigbares Absperrventil einzusetzen und der in die Bypassleitung eingesetzen Förderpumpe ein Rückschlagventil nachzuschalten.

Wird nach dem erfindungsgemäßen Verfahren bzw. mit der vorschlagsgemäß ausgebildeten Vorrichtung das in der Rohrschlange des Wärmetauschers befindliche Medium periodisch in pulsierende Bewegungen versetzt, so ist sichergestellt, daß auch bei einer hohen Durchsatzleistung - entsprechend einer kurzen Aufenthaltszeit des Mediums in der Rohrschlange - eine gute Wärmeübertragung von der Flüssigkeit auf das Medium gewährleistet ist. Durch die pulsierende Bewegung wird nämlich das Medium in der Rohrschlange in Turbulenzen versetzt, so daß der naturgemäß kältere Kern des Mediums an die Innenwand der Rohrschlange und damit an die Grenzfläche des Wärmeaustauschers verlagert wird. Gegenüber der kontinuierlichen Bewegung des Mediums wird dabei sowohl das Medium schonend behandelt als auch dessen Entmischung vorgebeugt. Zusätzlich wird während des Ruhetaktes die Ausbildung einer blasenfreien Mediummenge ermöglicht und damit durch eingetragene Luftblasen verursachte Dosierfehler vermieden.

Darüber hinaus wird der Gefahr der Bildung von Ablagerungen an der Innenwand der Rohrschlange entgegengewirkt. Durch die pulsierenden Bewegungen des Mediums wird dieses in der Rohrschlange periodisch hin und her bewegt. Die kurzzeitige Umkehrung der Strömungsrichtung bewirkt dabei, daß an der Innenwand haftende Teilchen abgelöst und damit Ablagerungen verhindert werden. Ohne großen baulichen und verfahrenstechnischen Aufwand wird somit die Lebensdauer des Wärmetauschers in einem erheblichen Maße verlängert, Dosierfehler und Ungenauigkeiten werden demnach bei einfacher Handhabung weitgehend vermieden.

In der Zeichnung sind drei Ausführungsbeispiele einer Vorrichtung zum Aufheizen eines Mediums, mittels der das erfindungsgemäße Verfahren zu verwirklichen ist, dargestellt, die nachfolgend im einzelnen erläutert sind. Hierbei zeigt; jeweils in schematischer Darstellung:
- Figur 1: eine Vorrichtung mit einem an die Zuführungsleitung des Wärmetauschers angeschlossenen Impulsglied,
- Figur 2: die Vorrichtung nach Figur 1 mit einem internen Kreislauf zur Erzeugung von pulsierenden Bewegungen des in der Rohrschlange des Wärmetauschers befindlichen Mediums und
- Figur 3: eine andersartige Ausgestaltung des Kreislaufes bei der Vorrichtung nach Figur 1.

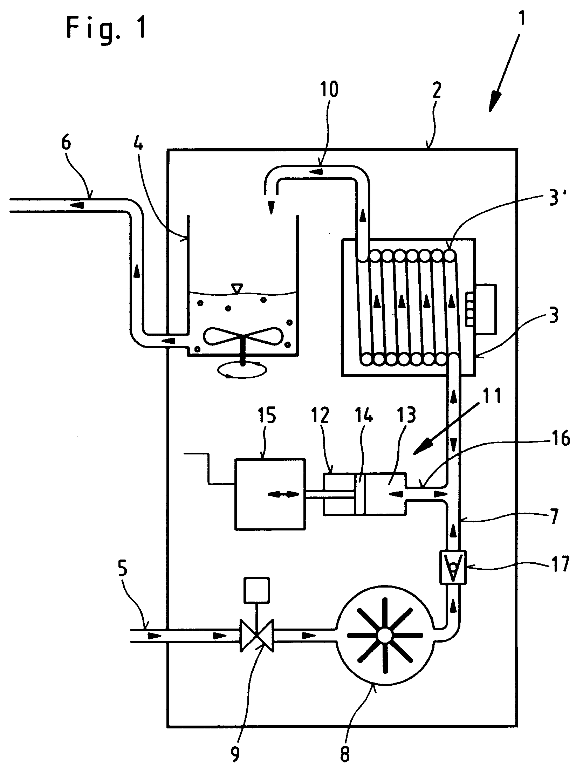

Die in den Figuren 1, 2 und 3 dargestellte und mit 1 bzw. 1' bzw. 1'' bezeichnete Vorrichtung dient zum Aufheizen eines Mediums, beispielsweise eines einer Saugstelle zuzuführenden flüssigen Futtermittels, und besteht im wesentlichen aus einem in einem Gehäuse 2 angeordneten Wärmetauscher 3 und einem Mixer 4. Über eine Zulaufleitung 5 wird das Medium der Vorrichtung 1 zugeführt und in dieser über eine mit einer Förderpumpe 8 ausgestatteten Leitung 7, die an eine in dem Wärmetauscher 3 angeordnete Rohrschlange 3' angeschlossen ist, zum Erwärmen in den mit nicht dargestellten Heizstäben und einer Flüssigkeit versehenen Wärmetauscher 3 gefördert. Über eine weitere Leitung 10 strömt das erwärmte Medium dem Mixer 4 zu, in dem dieses durchgemischt wird und/oder Zusatzstoffe in dieses eingemischt werden, bevor das Medium über eine Leitung 6 zu einer Saugstelle gelangt. Um einen Rücklauf zu vermeiden, ist in die Leitung 7 in Förderrichtung vor der Förderpumpe 8 ein Absperrventil 9 eingesetzt.

Damit sich in der Rohrschlange 3' des Wärmetauschers 3 keine Ablagerungen bilden können und ein guter Wärmeübergang von der in dem Wärmetauscher 3 befindlichen aufgeheizten Flüssigkeit auf das Medium gewährleistet ist, wird dieses periodisch in pulsierende Bewegungen versetzt. Dadurch wird das Medium durchgewirbelt, so daß dessen kälterer Kern an die Innenwand der Rohrschlange 3' gelangt und somit in kurzer Zeit eine gleichmäßige Erwärmung, ohne daß sich Blasen bilden, gewährleistet ist.

Zur Erzeugung der periodisch pulsierenden Bewegungen, die mehrfach in Zyklen, beispielsweise vier bis acht Mal, ablaufen und zwischen denen jeweils ein Ruhetakt vorgesehen ist, dient bei der Vorrichtung 1 nach Figur 1 ein Impulsglied 11, das als Kolben- oder Membranpumpe 12 ausgebildet und über eine Zweigleitung 16 an die Leitung 7 zwischen der Pumpe 8 und dem Wärmetauscher 3 angeschlossen ist. Der in einem Zylinder 13 verschiebbar eingesetzte Kolben 14 der Kolbenpumpe 12 ist an ein gesteuert einschaltbares Antriebsaggregat 15 angeschlossen, durch das der Kolben 14 periodisch antreibbar ist. Durch die translatorischen Verstellbewegungen des Kolbens 14 wird somit die in der Rohrschlange 3' des Wärmetauschers 3 ruhende Flüssigkeitsäule des Mediums pulsierend bewegt und dadurch durchgewirbelt. Durch ein in die Leitung 7 zwischen der Förderpumpe 8 und der Zweigleitung 16 eingesetztes Rückschlagventil 17 ist sichergestellt, daß die durch das Impulsglied 11 erzeugten Schwingungen nahezu verlustlos auf das in der Rohrschlange 3' sich befindende Medium übertragen werden.

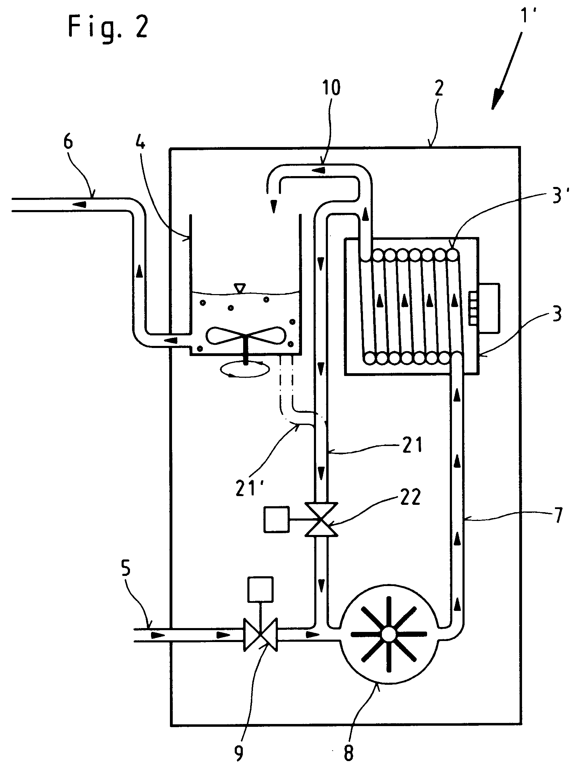

Bei der Vorrichtung 1' nach Figur 2 ist durch eine an die Leitung 10 bzw. den Mixer 4 angeschlossene Bypassleitung 21 bzw. 21' ein interner Kreislauf geschaffen, mittels dem Rohrschlange 3' des Wärmetauschers 3 durch Inbetriebnahme der Förderpumpe 8 ganz oder teilweise entleerbar ist, um auf diese Weise periodisch pulsierende Bewegungen hervorzurufen. Durch ein in die Bypassleitung 21 eingesetztes elektromagnetisch betätigbares Absperrventil 22 kann der interne Kreislauf bei geschlossenem Absperrventil 9 wahlweise in Betrieb gesetzt werden.

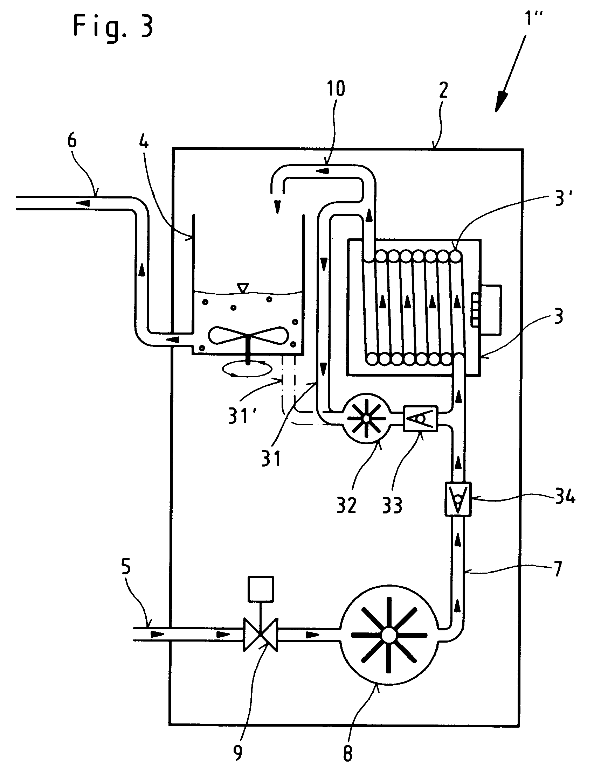

Gemäß Figur 3 ist bei der Vorrichtung 1'' zur Bildung eines internen Kreislaufes an die Leitung 10 bzw. den Mixer 4 eine Bypassleitung 31 bzw. 31' angeschlossen, die mit einer gesonderten Förderpumpe 32 ausgestattet und mit der Leitung 7 zwischen der in diese eingesetzten Förderpumpe 8 und dem Wärmetauscher 3 verbunden ist. Den Förderpumpen 32 und 8 ist jeweils ein Rückschlagventil 33 bzw. 34 nachgeschaltet, so daß bei Zuführung eines zu erwärmenden Mediums mittels der Förderpumpe 8 dieses nicht in die Bypassleitung 31 und bei eingeschaltetem internen Kreislauf nicht über die Leitung 7 abströmen kann.

Durch kurzzeitiges Inbetriebnehmen des internen Kreislaufes durch Einschalten der Förderpumpe 32 - dadurch werden wiederum pulsierende Bewegungen in dem in der Rohrschlange 3' des Wärmetauschers 3 befindenden Mediums hervorgerufen - kann somit, um den Wärmeaustausch zu steigern und Ablagerungen zu vermeiden, das in der Rohrschlange 3' des Wärmetauschers 3 befindliche Medium durchgewirbelt werden.

## Patentansprüche

1. Verfahren zum Aufheizen eines Mediums, vorzugsweise eines einer Saugstelle zuzuführenden in einem Mixer aufzubereitenden flüssigen Futtermittels, das in einer Rohrschlange einen Wärmetauscher durchströmt und in diesem aufgeheizt wird,
**dadurch gekennzeichnet,**
daß das zu erwärmende in der Rohrschlange (3') des Wärmetauschers (3) befindliche Medium periodisch in pulsierende Bewegungen versetzt wird.

2. Verfahren nach Anspruch 1,
**dadurch gekennzeichnet,**
daß das zu erwärmende Medium mittels eines dem Wärmetauscher (3) vorgeschalteten, an dessen Zuführungsleitung (7) angeschlossenen Impulsgliedes (11), z. B. in Form einer Kolben- oder Membranpumpe (12), in pulsierende Bewegungen versetzt wird.

3. Verfahren nach Anspruch 1,
**dadurch gekennzeichnet,**
daß das zu erwärmende Medium mittels einer in die Zuführungsleitung (7) des Wärmetauschers (3) angeordneten Förderpumpe (8) oder einer in einer diesem zugeordneten Bypassleitung (31) eingesetzten Förderpumpe (32) in pulsierende Bewegungen versetzt wird.

4. Verfahren nach Anspruch 1 oder 3,
**dadurch gekennzeichnet,**
daß das in dem Wärmetauscher (3) befindliche Medium periodisch ganz oder teilweise durch in dem Mixer (4) befindliches Medium ersetzt oder in einem internen Kreislauf (Bypassleitung 21; 31) der Vorrichtung (1', 1'') umgewälzt wird.

5. Verfahren nach einem oder mehreren der Ansprüche 1 bis 4,
**dadurch gekennzeichnet,** daß zwischen den periodisch im Millisekundenbereich ausgeführten pulsierenden Bewegungen bzw. dem Austausch des zu erwärmenden Mediums sich jeweils ein Ruhetakt von einigen Millisekunden anschließt und daß vorzugsweise vier bis acht derartige Zyklen ausgeführt werden.

6. Vorrichtung zur Anwendung des Verfahrens nach einem der Ansprüche 1 bis 5
mit einem von einer Rohrschlange durchsetzten Wärmetauscher und einer in dessen Zuleitung eingesetzten Förderpumpe,
**dadurch gekennzeichnet,**
daß an die Zuleitung (7) des Wärmetauschers (3) ein Impulsglied (117; Förderpumpe 8 bzw. 32) angeschlossen ist, mittels dem das in in der Rohrschlange (3') des Wärmetauschers befindliche Medium in pulsierende Bewegungen versetzbar ist.

7. Vorrichtung nach Anspruch 6,
**dadurch gekennzeichnet,**
daß das Impulsglied (11) durch eine Kolben- oder Membranpumpe (12) gebildet ist, die mittels eines gesteuert einschaltbaren Antriebsgliedes (15) periodisch antreibbar ist.

8. Vorrichtung nach Anspruch 6 oder 7,
**dadurch gekennzeichnet,**
daß in die Zuführungsleitung (7) des Wärmetauschers (3) in Förderrichtung vor dem an diese angeschlossenen Impulsglied (11) ein Rückschlagventil (17) eingesetzt ist.

9. Vorrichtung nach Anspruch 6,
**dadurch gekennzeichnet,**
daß zum vollständigen oder teilweisen Austausch des in der Rohrschlange (3') des Wärmetauschers (3) befindlichen Mediums diesem eine zuschaltbare Bypassleitung (21 bzw. 31) zugeordnet ist, die unmittelbar am Ausgang des Wärmetauschers (3) oder an den Mixer (4) und vor der in die Zuleitung (7) eingesetzten Förderpumpe (8) oder nach dieser, versehen mit einer zusätzlichen Förderpumpe (32), an die Zuleitung (7) angeschlossen ist.

10. Vorrichtung nach Anspruch 9,
**dadurch gekennzeichnet,**
daß zum Zuschalten der vor der Förderpumpe (8) an die Zuleitung (7) angeschlossenen Bypassleitung (21) in diese ein elektromagnetisch betätigbares Absperrventil (22) eingesetzt ist.

11. Vorrichtung nach Anspruch 9,
**dadurch gekennzeichnet,**
daß der in die Bypassleitung (31) eingesetzen Förderpumpe (32) ein Rückschlagventil (33) nachgeschaltet ist.
